# EUROPÄISCHE PATENTSCHRIFT

(11) **EP 0 802 210 B1**
(45) Veröffentlichungstag und Bekanntmachung des Hinweises auf die Patenterteilung: **07.07.2004**
(21) Anmeldenummer: 97105593.4
(22) Anmeldetag: 04.04.1997
(51) Int. Cl.: C08G 18/79, C08G 18/80, C08G 18/66, C08G 18/32, C08G 18/38

(54) **Wässrige bzw. wasserverdünnbare blockierte Polyisocyanate für die Herstellung von wässrigen 1K-PUR-Klarlacken mit wesentlich verringerter Thermovergilbung**
Aqueous or waterborne blocked polyisocyanates for the preparation of aqueous 1-component-PUR-clearcoat with reduced thermoyellowing
Polyisocyanates bloqués aqueux ou dispersables dans l'eau pour la production de revêtements aqueux transparents de polyuréthanes à un composant à jaunissement réduit

(30) Priorität: 17.04.1996 DE 19615116
(43) Veröffentlichungstag der Anmeldung: 22.10.1997
(73) Patentinhaber: Bayer MaterialScience AG, 51368 Leverkusen (DE)
(72) Erfinder: Baumbach, Beate, Dr., 51373 Leverkusen (DE); König, Eberhard, Dr., 51375 Leverkusen (DE); Kahl, Lothar, Dr., 51465 Bergisch Gladbach (DE); Yuva, Nusret, Dipl.Ing., 42929 Wermelskirchen (DE)

(56) Entgegenhaltungen:
- EP-A- 0 050 284
- EP-A- 0 307 775
- EP-A- 0 615 992
- US-A- 5 216 078

## Beschreibung

Die Erfindung betrifft neue wäßrige bzw. wasserverdünnbare blockierte Polyisocyanate, die die Herstellung von bei vergleichsweise niedrigen Temperaturen von 130 bis 150°C einbrennbaren Einkomponenten-Polyurethanlacken mit wesentlich verringerter Thermovergilbung gestatten, ein Verfahren zu ihrer Herstellung und ihre Verwendung.

Mehrschichtlackierungen, die als Decklack einen glänzenden Klarlack auf Polyurethanbasis aufweisen, gewinnen wegen ihrer ausgezeichneten lacktechnischen Eigenschaften, insbesondere bei der Automobillackierung, immer größere Bedeutung.

Der Klarlack als oberste Schicht des Gesamtaufbaus hat ein extrem hohes Anforderungsniveau zu erfüllen. Neben Lackeigenschaften wie Härte, Kratzfestigkeit, Lösemittel- und Chemikalienbeständigkeit sind insbesondere eine niedrige Einbrenntemperatur und eine ausreichende Überbrennfestigkeit gefordert.

Einkomponenten-Polyurethan-Einbrennlacke, deren Vernetzerkomponente im wesentlichen aus blockierten Polyisocyanaten (BNCO-Vernetzer) besteht, weisen jedoch eine ausgesprochene Tendenz zur Vergilbung bei hohen Einbrenntemperaturen bzw. bei langer Dauer des Einbrennvorgangs auf. Dies gilt sowohl für lösemittelhaltige als auch für wäßrige Beschichtungssysteme, die aufgrund der immer strengeren Emissionsrichtlinien bezüglich der bei der Lackapplikation freiwerdenden Lösemittel zunehmend an Bedeutung gewinnen.

In der DE-A 2 456 469, EP-A 12 348 und DE-A 3 234 590 werden wäßrige BNCO-Vernetzer auf Basis von biuretisiertem 1,6-Diisocyanatohexan beschrieben. Über die thermische Vergilbungsstabilität der damit erzeugten Lacke wird nichts mitgeteilt. Wie allerdings Versuche gezeigt haben, verhalten sich derartige BNCO-Vernetzer in OEM-Klarlacken bezüglich der Thermovergilbung sehr unbefriedigend (siehe Vergleichsbeispiel 6). Bei der Verwendung von ε-Caprolactam als Blockierungsmittel sind zudem sehr hohe Einbrenntemperaturen von über 160°C erforderlich.

In EP-A 576 952 bzw. EP-A 566 953 werden wäßrige butanonoximblockierte Polyisocyanate auf Basis von 4,4'-Diisocyanato-dicyclohexylmethan (®Desmodur W, Fa. Bayer AG) bzw. eine Kombination mit trimerisiertem 1,6-Diisocyanatohexan beschrieben, die eine relativ niedrigere Vemetzungstemperatur gestatten, jedoch auch zu 1K-Klarlacken mit unakzeptabel hoher Thermovergilbung führen (siehe Vergleichsbeispiel 4 bzw. 5).

Es sind auch Stabilisierungsmaßnahmen gegen die Vergilbung für lösemittelhaltige Systeme bekannt geworden. In der EP-A 581 040 bzw. EP-A 615 991 wird beispielsweise der Zusatz bzw. Einbau von bestimmten Hydrazidverbindungen vorgeschlagen. Ob diese Hydrazidverbindungen auch in wäßriger Phase wirksam werden, wird nicht dargelegt.

Aufgabe der vorliegenden Erfindung war es daher, wäßrige bzw. wasserverdünnbare BNCO-Vernetzer bereitzustellen, die in Kombination mit wäßrigen Polyolkomponenten die Herstellung von bei vergleichsweise niedrigen Temperaturen einbrennbaren Einkomponenten-Polyurethanlacken mit wesentlich verringerter Thermovergilbung gestatten.

Diese Aufgabe konnte mit den erfindungsgemäßen wäßrigen bzw. wasserverdünnbaren blockierten Polyisocyanaten gelöst werden, welche sich durch eine hervorragende Überbrennfestigkeit und relativ niedrige Einbrenntemperaturen von 130 bis 150°C auszeichnen.

Gegenstand der vorliegenden Erfindung sind wäßrige oder wasserverdünnbare blockierte Polyisocyanate aus
a) 40 bis 80 Gew.-% einer Polyisocyanatkomponente auf Basis von Diisocyanaten des Molekulargewichtsbereiches von 140 bis 350 mit einem Isocyanuratgruppengehalt (berechnet als C₃N₃O₃; Molekulargewicht = 126) von 2 bis 30 Gew.-% und
b) 5 bis 30 Gew.-% eines oder mehrerer im Sinne der Isocyanat-Additionsreaktion monofunktioneller Blockierungsmittel für Isocyanatgruppen und
c) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300 und
d) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
e) 0 bis 15 Gew.-% einer (potentiell) anionischen Aufbaukomponente aus mindestens einer Komponente mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
f) 0 bis 15 Gew.-% eines oder mehrerer (cyclo)aliphatischer Polyamine mit 2 bis 3 Aminogruppen des Molekulargewichtsbereichs von 60 bis 300 und
g) 0 bis 15 Gew.-% eines oder mehrerer mehrwertiger Alkohole mit 2 bis 4 Hydroxylgruppen des Molekulargewichtsbereichs von 62 bis 250,
   wobei sich die genannten Prozentangaben von a) bis g) zu 100 ergänzen. dadurch gekennzeichnet, daß
h) der Gehalt an Isocyanuratgruppen (berechnet als C₃N₃O₃; Molekulargewicht = 126) mindestens 2 Gew.-% und
i) der Gehalt an blockierten Isocyanatgruppen (berechnet als NCO; Molekulargewicht = 42) 5 bis 11 Gew.-% und
k) der Gehalt an chemisch gebundenen Hydrazidgruppen (berechnet als HN-NH; Molekulargewicht = 30) 0,1 bis 3,0 Gew.-% beträgt.

Gegenstand der Erfindung ist auch ein Verfahren zur Herstellung von wäßrigen oder wasserverdünnbaren blockierten Polyisocyanaten, dadurch gekennzeichnet. daß man
A) 100 Äquivalent-% einer Isocyanuratgruppen aufweisenden (cyclo)aliphatischen Polyisocyanatkomponente mit
B) 60 bis 85 Äquivalent-% eines oder mehrerer monofunktioneller Blockierungsmittel für Isocyanatgruppen und
C) 1 bis 20 Äquivalent-% einer oder mehrerer Hydrazidgruppen enthaltender Stabilisierungskomponenten und
D) 1 bis 25 Äquivalent-% einer Ethylenoxideinheiten enthaltenden nichtionisch-hydrophilen Aufbaukomponente und
E) 0 bis 25 Äquivalent-% einer Carboxylgruppen enthaltenden (potentiell) anionischen Aufbaukomponente und
F) 0 bis 15 Äquivalent-% eines oder mehrerer (cylco)aliphatischer Polyamine und
G) 0 bis 15 Äquivalent-% eines oder mehrerer mehrwertiger Alkohole umsetzt,
wobei die Mengenverhältnisse der Reaktionspartner so gewählt werden, daß das Äquivalentverhältnis von Isocyanatgruppen der Komponente A) zu gegenüber Isocyanaten reaktionsfähigen Gruppen der Komponenten B), C), D), E), F) und G) bei 1:0,8 bis 1:1,2 liegt.

Gegenstand der Erfindung ist schießlich auch die Verwendung der wäßrigen oder wasserverdünnbaren blockierten Polyisocyanate in Kombination mit in Wasser löslichen oder dispergierbaren Polyhydroxylverbindungen zur Herstellung von. gegebenenfalls die üblichen Hilfs- und Zusatzmittel der Beschichtungstechnologie enthaltenden, wäßrigen Einbrennlacken.

Die Ausgangskomponente A) ist ein organisches Polyisocyanat auf Basis von Diisocyanaten des Molekulargewichts von 140 bis 350 mit einem Isocyanuratgruppengehalt (berechnet als C₃N₃O₃; Molekulargewicht = 126) von 2 bis 30 Gew.-%, vorzugsweise mindestens 5 Gew-%. Als Diisocyanate können 4,4'-Diisocyanato-dicyclohexylmethan (®Desmodur W, Fa. Bayer AG), I-Isocyanato-3,3,5-trimethyl-5-isocyanatomethyl-cyclohexan (IPDI) und/oder 1,6-Diisocyanatohexan (HDI) oder Gemische solcher Polyisocyanate verwendet werden. Die Herstellung der Polyisocyanat-Komponente A) aus den erwähnten Diisocyanaten erfolgt nach bekannten Methoden, wie sie z.B. in J. prakt. Chem 336 (1994) und in den EP-A 3 765 und EP-A 649 866 beschrieben sind.

Als monofunktionelle Blockierungsmittel B) werden Oxime und/oder Pyrazole eingesetzt. Bevorzugte Blockierungsmittel sind Butanonoxim und/oder 3,5-Dimethylpyrazol.

Bei der Komponente C) handelt es sich um mono- und/oder difunktionelle Carbonsäurehydrazide des Molekulargewichtsbereichs von 70 bis 300, wie z.B. Adipinsäuredihydrazid, Benzoesäurehydrazid, p-Hydroxybenzoesäurehydrazid, die isomeren Terephthalsäurehydrazide, N-2,2,6,6-tetramethyl-4-piperidinyl-N-aminooxamid (®Luchem HA-R 100, Fa. Elf Atochem), 3-(4-Hydroxy-3,5-di-t-butyl-phenyl)-propionsäurehydrazid, 2-Hydroxy-3-t-butyl-5-methylphenylessigsäurehydrazid oder Gemische dieser Verbindungen. Andere wirksame Hydrazide sind Addukte aus cyclischen Carbonaten und Hydrazin, beispielsweise aus 1 mol Hydrazin und 1 mol Propylencarbonat oder 1 mol Hydrazin und 2 mol Propylencarbonat, wie sie in den EP-A 654 490 und EP-A 682 051 beschrieben sind. Bevorzugte Stabilisatoren sind Adipinsäuredihydrazid und N-2,2,6,6-tetramethyl-4-piperidinyl-N-aminooxamid.

Die Komponente D) besteht aus mindestens einer nichtionisch-hydrophilen Verbindung, die pro Molekül eine oder zwei gegenüber Isocyanatgruppen reaktionsfähige Gruppen, insbesondere Hydroxylgruppen aufweist. Die Polyetherketten dieser Verbindung bestehen zumindest zu 80 Gew.-%, vorzugsweise zu 100 Gew.-%, aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise monofunktionelle Polyethylenglykolmonoalkylether mit Molekulargewichten von 350 bis 3.000 (z.B. ®Breox 350, 550, 750, Fa. BP Chemicals). Vorzugsweise liegt das Molekulargewicht zwischen 600 und 900.

Die Komponente E) besteht aus mindestens einer (potentiell) anionischen Verbindung mit mindestens einer gegenüber Isocyanatgruppen reaktionsfähigen Gruppe. Vorzugsweise handelt es sich bei diesen Verbindungen um mindestens eine, bevorzugt eine oder zwei Hydroxylgruppen aufweisende Carbonsäuren oder um Salze derartiger Hydroxycarbonsäuren. Geeignete derartige Säuren sind beispielsweise 2,2-Bis-(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder Gemische derartiger Säuren. Besonders bevorzugt wird als Komponente E) Dimethylolpropionsäure und/oder Hydroxypivalinsäure verwendet. Die freien Säuregruppen, insbesondere Carboxylgruppen, stellen die vorstehend genannten "potentiell anionischen" Gruppen dar, während es sich bei den durch Neutralisation mit Basen erhaltenen salzartigen Gruppen, insbesondere Carboxylatgruppen, um die vorstehend angesprochenen "anionischen" Gruppen handelt.

Als Komponente F) kommen di-, tri- und/oder tetrafunktionelle Substanzen des Molekulargewichtsbereichs 60 bis 300 mit Aminogruppen in Betracht, wie z.B. Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminomethyl-cyclohexan (IPDA), 4,4'-Diamino-dicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan oder Gemische dieser Verbindungen.

Bei der Komponente G) handelt es sich um di-, tri- und/oder tetrafunktionelle Substanzen des Molekulargewichts 62 bis 250 mit Hydroxylgruppen, wie z.B. Ethylenglykol, Propylenglykol, 1,4-Butandiol, 1,6-Hexandiol, Glycerin, Trimethylolethan, Trimethylolpropan, die isomeren Hexantriole, Pentaerythrit oder Gemische dieser Verbindungen.

Die Herstellung der erfindungsgemäßen blockierten Polyisocyanate aus den Ausgangskomponenten A) bis G) erfolgt mehrstufig, wobei die Mengenverhältnisse der Reaktionspartner so gewählt werden, daß das Äquivalentverhältnis von Isocyanatgruppen der Komponente A) zu gegenüber Isocyanaten reaktionsfähigen Gruppen der Komponenten B), C), D), E), F) und G) bei 1:0,8 bis 1:1,2, vorzugsweise bei 1:0,9 bis 1:1 liegt.

In die Berechnung dieses Äquivalentverhältnisses gehen weder die Carboxylgruppe der Komponente E) noch das zur Herstellung von Lösungen oder Dispersionen der Polyurethane verwendete Wasser oder Lösungsmittel noch das zur Neutralisation der Carboxylgruppen eingesetzte Neutralisationsmittel ein.

Die Komponente C) gelangt in einer solchen Menge zum Einsatz, daß in den letztendlich erhaltenen blockierten Polyisocyanaten 0,1 bis 3,0 Gew.-%, vorzugsweise 0,1 bis 1,0 Gew.-%, an chemisch gebundenen Hydrazidgruppen (berechnet als HN-NH, Molekulargewicht = 30) vorliegen.

Die Komponente D) gelangt in einer solchen Menge zum Einsatz, daß in den erhaltenen erfindungsgemäßen blockierten Polyisocyanaten 0,1 bis 5,0 Gew.-%, vorzugsweise 0,5 bis 3,0 Gew.-%, an innerhalb von end- und/oder seitenständig angeordneten Polyetherketten eingebauten Ethylenoxideinheiten (berechnet als C₂H₄O, Molekulargewicht = 44) vorliegen.

Die Menge der Komponente E) wird so bemessen, daß in dem erhaltenen erfindungsgemäßen blockierten Polyisocyanat 0,1 bis 1,5 Gew.-%, vorzugsweise 0,5 bis 0,7 Gew.-%, an chemisch fixierten Carboxylgruppen (berechnet als COOH, Molekulargewicht = 45) vorliegen, wobei die Gesamtmenge der zuletzt genannten Ethylenoxideinheiten und dieser Carboxylgruppen innerhalb der genannten Bereiche so bemessen sein muß, daß die Löslichkeit bzw. Dispergierbarkeit der blockierten Polyisocyanate in Wasser gewährleistet ist.

Von den erfindungsgemäßen blockierten Polyisocyanaten sind zwei Ausführungsformen bevorzugt:
- eine high solids-Variante, bei der das blockierte Polyisocyanat 65 bis 85 gew.-%ig in einem organischen Lösungsmittel gelöst ist und erst zum Zeitpunkt der Lackherstellung in Wasser dispergiert wird und
- eine wäßrige Variante, bei der das blockierte Polyisocyanat 20 bis 50 gew.-%ig in Wasser gelöst oder dispergiert ist.

Bei beiden Ausführungsformen werden im ersten Verfahrensschritt die Hydrophilierungskomponenten D) und E) vorgelegt und bei einer Temperatur von 80 bis 100°C, vorzugsweise bei 90°C, mit der Polyisocyanatkomponente A) umgesetzt bis die Hydrophilierungsmittel an das Polyisocyanat gebunden sind.

Anschließend wird das Reaktionsgemisch auf 70°C abgekühlt und das Blockierungsmittel B) zudosiert bis der theoretisch berechnete NCO-Wert erreicht wird. Die Temperatur sollte während der Umsetzung 80°C nicht übersteigen.

Der Einbau der Stabilisierungskomponente C) und der Kettenverlängerungsmittel F) und G) kann vor oder während des Lösungs- bzw. Dispergiervorgangs erfolgen.

So werden im Falle der high solids-Variante vorzugsweise die Komponenten C), F) und G) in einem organischen Lösungsmittel gelöst und dem Reaktionsgemisch zugesetzt, dessen Menge im übrigen so bemessen wird, daß 65 bis 85 gew.-%ige Lösungen resultieren. Geeignete Lösemittel sind z.B. N-Methylpyrrolidon, Methoxypropylacetat und Butyldiglykolacetat.

Im Falle der wäßrigen Variante werden die Komponenten C), F) und G) vorzugsweise in Wasser gelöst und das Reaktionsgemisch in dieser Lösung unter gutem Rühren dispergiert. Die Menge des als Dispergiermedium verwendeten Wassers wird so bemessen, daß 20 bis 50 gew.-%ige, vorzugsweise 30 bis 40 gew.-%ige, Dispersionen resultieren.

Die Zugabe der bis zur zumindest teilweisen Neutralisation der Carboxylgruppen erforderlichen Base kann vor, während oder nach dem Dispergierschritt erfolgen. Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanol, Triisopropanolamin, 2-Diethylamino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugtes Neutralisationsmittel ist Dimethylethanolamin.

Die erfindungsgemäßen wäßrigen oder wasserverdünnbaren blockierten Polvisocyanate stellen wertvolle Vernetzerharze für organische Polyhydroxylverbindungen bei der Herstellung von Einbrennlacken dar. Sie können hierbei anstelle der bislang für diesen Zweck eingesetzten blockierten Polyisocyanate verwendet werden und zeichnen sich gegenüber diesen insbesondere dadurch aus, daß sie bei vergleichsweise niedrigen Einbrenntemperaturen von 130 bis 150°C die Herstellung von Einkomponenten-Polyurethanlacken mit wesentlich verringerter Thermovergilbung gestatten.

Geeignete Polyhydroxylverbindungen für diesen Einsatzzweck sowie weitere Details bezüglich der Herstellung und Anwendung derartiger Einbrennlacke können der einschlägigen Literatur entnommen werden. Besonders bevorzugtes Anwendungsgebiet für die erfindungsgemäßen Produkte ist ihre Verwendung als Vernetzer für Einbrenn-Polyurethanklarlacke, wie sie als Decklacke insbesondere bei der Automobil-Mehrschichtlackierung zur Anwendung gelangen, wobei als Reaktionspartner für die erfindungsgemäßen blockierten Polyisocyanate die an sich bekannten wäßrigen bzw wasserverdungbaren Bindemittel auf Basis von Polyesterpolyolen, Polyacrylatpolyolen. Polyurethanpolyolen oder deren Gemische verwendet werden.

### Beispiele

In den nachfolgenden Beispielen beziehen sich alle Prozentangaben, soweit nicht anderslautend angemerkt, auf das Gewicht.

In den nachfolgenden Beispielen wird eine gemäß dem in DE-A 4 427 227 beschriebenen Verfahren hergestellte Polyester-Polyacrylat-Dispersion mit folgenden Kenndaten eingesetzt:

| | |
|---|---|
| Festkörper | 40,6 % |
| Viskosität | 2.400 mPas (bezogen auf die Dispersion, gemessen bei 23°C) |
| OH-Gehalt | 1,9 % (bezogen auf die Dispersion) |
| Äquivalentgewicht | 894,70 g |

Zur Herstellung der Polyester-Polyacrylat-Dispersion wird gemäß DE-A 4 427 227 verfahren.

1 710 g Trimethylolpropan, 5 310 g Neopentylglykol, 5 524 g Phthalsäureanhydrid, 332 g Maleinsäureanhydrid und 2 121 g Isophthalsäure werden in einer Apparatur mit Rührer, Thermometer, Heizung und Destillationsaufsatz eingewogen und innerhalb 1 Stunde auf 140°C erhitzt. Anschließend wird in 6 Stunden auf 200°C aufgeheizt und bei dieser Temperatur solange unter Wasserabspaltung kondensiert, bis die Auslaufviskosität (DIN4-Becher) 55 %ig in MPA bei 23°C auf 52-55 s angestiegen ist. Das so erhaltene Produkt (Polyester II der DE-A 4 427 227) hat eine Auslaufviskosität von 52,5 s (DIN4-Becher), eine Säurezahl von 6,7 mg KOH/g Substanz und eine OH-Zahl von 140 mg KOH/g Substanz.

500 g des oben beschriebenen Polyesters II und 108 g Butylglykol werden in einer Apparatur mit Rührer, Thermometer, Heizung und Kühlvorrichtung eingewogen und auf 120°C erhitzt. Innerhalb von 2 Stunden wird eine Mischung von 430 g Butylacrylat, 240 g Methylmethacrylat, 300 g Hydroxyethylmethacrylat und 10 g n-Dodecylmercaptan zudosiert. Im Anschluß daran wird innerhalb 1 Stunde eine Mischung von 215 g Butylacrylat, 120 g Methylmethacrylat, 150 g Hydroxyethylmethacrylat, 45 g Acrylsäure und 5 g n-Dodecylmercaptan zudosiert. Parallel zu den Monomerenmischungen werden innerhalb von 4 Stunden 53,6 g tert.-Butylper-2-ethylhexanoat (70 %ig) in Kohlenwasserstoffgemisch) zugegeben. Nach Ende der Peroxidzugabe wird 2 Stunden bei 120°C nachgerührt und auf 100°C abgekühlt. Es werden 48,9 g Dimethylethanolamin zugegeben und homogenisiert. Anschließend wird mit 2 829,9 g Wasser dispergiert und man erhält ein Produkt mit folgenden Kenndaten:

| | |
|---|---|
| Festkörper | 40,6 % |
| Viskosität | 2.400 mPas (23°C) |
| OH-Gehalt | 153,2 mg KOH/g Festharz |
| Säurezahl | 21,2 mg KOH/g Festharz |
| OH-Gehalt | 1,9 % (bezogen auf die Dispersion) |
| Äquivalentgewicht | 894,70 g |

### Beispiel 1 (erfindungsgemäß)

Herstellung eines erfindungsgemäßen wäßrigen blockierten Polyisocyanats.

Zur Herstellung des Desmodur W-Allophanat/Trimerisats wird gemäß EP-A 649 866 verfahren. Als Katalysator wird eine 4,4 gew.-%ige Lösung von N,N,N-Trimethyl-N-benzylammoniumhydroxid in n-Butanol verwendet (Katalysatorlösung in Beispiel 1 der EP-A 649 866).

1167 g Desmodur werden mit 33 g n-Butanol versetzt und 1 Stunde bei 90°C gerührt. Nach Beendigung der Urethanisierung versetzt man bei 90°C mit ca. 4 g der Katalysatorlösung. Wenn die Reaktionsmischung einen NCO-Gehalt von 25,6 % erreicht hat, stoppt man durch Zugabe von 0,3 g einer 25 %igen Lösung von Dibutylphosphat in Desmodur W ab. Überschüssiges monomeres Desmodur W wird durch Dünnschichtdestillation entfernt. Das isolierte Festharz wird 70 %ig in MPA/Xylol (1:1) gelöst und man erhält ein Produkt mit folgenden Kenndaten:

| | |
|---|---|
| Festkörper | 70 % |
| NCO-Gehalt | 8,63 % |
| Viskosität | 300 mPas (23°C) |
| monomeres Desmodur W | 0,20 % |

### Ansatz:

| | |
|---|---|
| 486,67 g (1,00 val) | eines Allophanat- und Isocyanuratgruppen enthaltenden Lack-polyisocyanats auf Basis von 4,4'-Diisocyanato-dicyclohexyl-methan (®Desmodur W, Fa. Bayer AG), hergestellt gemäß dem in EP-A 649 866 beschriebenen Verfahren, als 70%ige Lösung in Methoxypropylacetat/ Xylol (1:1) mit einem NCO-Gehalt (bezogen auf die Lösung) von 8,63 % und einer Viskosität (bezogen auf die Lösung, gemessen bei 23°C) von 300 mPas. |
| | |
| 75,00 g (0,10 val) | eines monofunktionellen Polyethylenglykolmonomethylethers mit einem mittleren Molekulargewicht von 750 (®Carbowax 750, Fa. Union Carbide) |
| | |
| 69,70 g (0,80 val) | Butanonoxim |
| | |
| 2,55 g (0,03 val) | 1-Amino-3,3,5-trimethyl-5-aminomethyl-cyclohexan (IPDA) |
| | |
| 2,61 g (0,03 val) | Adipinsäuredihydrazid (ASDH) |
| | |
| 764,80 g | entionisiertes Wasser |

### Durchführung:

In einer Standard-Rührapparatur werden 75,00 g ®Carbowax 750 vorgelegt und auf 90°C erhitzt. Unter Rühren werden zügig 486,67 g des o.g. Polyisocyanats hinzugegeben. Innerhalb von ca. 30 Minuten wird ein NCO-Wert von 6,28 % erreicht (theoretischer NCO-Wert: 6,73 %). Anschließend wird das Reaktionsgemisch auf 70°C abgekühlt und 69,70 g Butanonoxim innerhalb von ca. 30 Minuten so zudosiert, daß eine Temperatur von 80°C nicht überschritten wird (exotherme Reaktion). Beim Erreichen eines NCO-Wertes von 0,25 % (theoretischer NCO-Wert: 0,66 %) wird das auf 70°C abgekühlte Reaktionsgemisch durch Überführung in eine Lösung von 2,55 g IPDA und 2,61 g ASDH in 764,80 g entionisiertem Wasser (ca. 23°C) innerhalb von ca. 30 Minuten unter gutem Rühren dispergiert. Man erhält eine milchige Dispersion mit einem Festkörper von 35 % und einer Auslaufzeit von 14 Sekunden (DIN 4/23°C). Das NCO-Äquivalentgewicht der Dispersion (bezogen auf die blockierten Isocyanatgruppen) liegt bei 1750,00 g. Das blockierte Polyisocyanat besitzt folgende Kennzeichen:
- Gehalt an Isocyanuratgruppen: 4,86 % (berechnet als C₃N₃O₃; Molekulargewicht = 126)
- Gehalt an blockierten Isocyanatgruppen: 6,85 % (berechnet als NCO; Molekulargewicht = 42)
- Gehalt an Hydrazidgruppen: 0,18 % (berechnet als HN-NH; Molekulargewicht = 30)

### Beispiel 2 (erfindungsgemäß)

Herstellung eines erfindungsgemäßen wäßrigen blockierten Polyisocyanats.

| | |
|---|---|
| 355,93 g (1,00 val) | eines Isocyanuratgruppen enthaltenden Lackpolyisocyanats auf Basis von IPDI, hergestellt gemäß dem in EP-A 3 765 beschriebenen Verfahren, als 70%ige Lösung in Solvent-naphtha 100 mit einem NCO-Gehalt (bezogen auf die Lösung) von 11,80 % und einer Viskosität (bezogen auf die Lösung, gemessen bei 23°C) von 2200 mPas. |
| | |
| 75,00 g (0,10 val) | ®Carbowax 750 |
| | |
| 69,70 g (0,80 val) | Butanonoxim |
| | |
| 2,55 g (0,03 val) | IPDA |
| | |
| 2,61 g (0,03 val) | ASDH |
| | |
| 622,38 g | entionisiertes Wasser |

Zur Herstellung des IPDI-Trimerisats wird gemäß EP-A 3 765 verfahren. Als Katalysator wird eine 6 gew.-%ige Lösung von 2-Hydroxyethyltrimethylammoniumhydroxid in 2-Ethylhexanol/Methanol verwendet (Katalysatorlösung I-a der EP-A 3 765).

4 000 g IPDI werden bei 60 - 80°C mit ca. 25 g der Katalysatorlösung unter Trimerisierung umgesetzt, bis ein NCO-Gehalt von 30 % erreicht ist. Man rührt 30 Minuten bei ca. 100°C nach und dünnschichtet bei 170°C/0,1 m bar. Das isolierte Festharz wird 70 %ig in SN 100 gelöst und man erhält ein Produkt mit folgenden Kenndaten:

| | |
|---|---|
| Festkörper | 70 % |
| NCO-Gehalt | 11,80% |
| Viskosität | 2.200 mPas (23°C) |
| monomeres IPDI | 0,15 % |

### Durchführung:

In einer Standard-Rührapparatur werden 75,00 g ®Carbowax 750 vorgelegt und auf 90°C erhitzt. Unter Rühren werden zügig 355,93 g des o.g. Polyisocyanats hinzugegeben. Innerhalb von ca. 30 Minuten wird ein NCO-Wert von 8,61 % erreicht (theoretischer NCO-Wert: 8,77 %). Anschließend wird das Reaktionsgemisch auf 70°C abgekühlt und 69,70 g Butanonoxim innerhalb von ca. 30 Minuten so zudosiert, daß eine Temperatur von 80°C nicht überschritten wird (exotherme Reaktion). Beim Erreichen eines NCO-Wertes von 0,54 % (theoretischer NCO-Wert: 0,84 %) wird das auf 70°C abgekühlte Reaktionsgemisch durch Überführung in eine Lösung von 2,55 g IPDA und 2,61 g ASDH in 622,38 g entionisiertem Wasser (ca. 23°C) innerhalb von ca. 30 Minuten unter gutem Rühren dispergiert. Man erhält eine milchige Dispersion mit einem Festkörper von 35 % und einer Auslaufzeit von 17 Sekunden (DIN 4/23°C). Das NCO-Äquivalentgewicht der Dispersion (bezogen auf die blockierten Isocyanatgruppen) liegt bei 1409,40 g. Das blockierte Polyisocyanat bezitzt folgende Kennzeichen:
- Gehalt an Isocyanuratgruppen: 13,36 %
   (berechnet als C₃N₃O₃; Molekulargewicht = 126)
- Gehalt an blockierten Isocyanatgruppen: 8,42 %
   (berechnet als NCO; Molekulargewicht = 42)
- Gehalt an Hydrazidgruppen: 0,23 %
   (berechnet als HN-NH, Molekulargewicht = 30)

### Beispiel 3 (erfindungsgemäß)

Herstellung eines erfindungsgemäßen wasserverdünnbaren blockierten Polyisocyanats.

| | |
|---|---|
| 355,93 g (1,00 val) | eines Isocyanuratgruppen enthaltenden Lackpolyisocyanats auf Basis von IPDI, hergestellt gemäß dem in EP-A 3 765 beschriebenen Verfahren, als 70%ige Lösung in Methoxypropylacetat/Xylol (1:1) mit einem NCO-Gehalt (bezogen auf die Lösung, gemessen bei 23°C) von 2200 mPas |
| | |
| 75,00 g (0,10 val) | ®Carbowax 750 |
| | |
| 76,90 g (0,80 val) | 3,5-Dimethylpyrazol |
| | |
| 5,11 g (0,06 val) | IPDA |
| | |
| 4,84 g (0,04 val) | N-2,2,6,6-tetramethyl-4-piperidinyl-N-aminooxamid (®Luchem HA-R 100; Fa. Elf Atochem) |
| | |
| 69,36 g | N-Methylpyrrolidon (NMP) |

### Durchführung:

In einer Standard-Rührapparatur werden 75,00 g ®Carbowax 750 vorgelegt und auf 90°C erhitzt. Unter Rühren werden zügig 355,93 g des o.g. Polyisocyanats hinzugegeben. Innerhalb von ca. 30 Minuten wird ein NCO-Wert von 8,61 % erreicht (theoretischer NCO-Wert: 8,77 %). Anschließend wird das Reaktionsgemisch auf 70°C abgekühlt und 76,90 g Dimethylpyrazol innerhalb von ca. 30 Minuten so zudosiert, daß eine Temperatur von 80°C nicht überschritten wird (exotherme Reaktion). Beim Erreichen eines NCO-Wertes von 0,54 % (theoretischer NCO-Wert: 0,83 %) wird eine Lösung von 5,11 g IPDI und 4,84 g ®Luchem HA-R 100 in 69,36 g NMP im Schuß hinzugegeben und das Reaktionsgemisch noch ca. 30 Minuten bei 70°C gerührt. Danach ist in der Lösung kein NCO-Gehalt mehr IR-spektroskopisch nachweisbar und der Ansatz wird auf Raumtemperatur abgekühlt. Man erhält eine nahezu farblose Lösung mit einem Festkörper von 70 % und eine Viskosität von 31.000 mPas (23°C). Das NCO-Äquivalentverhältnis der Lösung (bezogen auf die blockierten Isocyanatgruppen) liegt bei 734,27 g. Das blockierte Polyisocyanat besitzt folgende Kennzeichen:
- Gehalt an Isocyanuratgruppen: 12,97 %
   (berechnet als C₃N₃O₃; Molekulargewicht = 126)
- Gehalt an blockierten Isocyanatgruppen: 8,18 %
   (berechnet als NCO; Molekulargewicht = 42)
- Gehalt an Hydrazidgruppen: 0,29 %
   (berechnet als HN-NH; Molekulargewicht = 30)

### Beispiel 4 (Vergleichsbeispiel)

Als Vergleich dient ein wäßriges blockiertes Polyisocyanat (®Desmodur W-Prepolymer), hergestellt gemäß Beispiel 2 der EP-A 576 952, mit einem Festkörper von 35 % und einer Viskosität von 5.000 mPas (23°C). Das NCO-Äquivalentgewicht (bezogen auf die blockierten Isocyanatgruppen) liegt bei 2625,00 g. Das blockierte Polyisocyanat besitzt folgende Kennzeichen:
- Gehalt an Isocyanuratgruppen: 0 %
   (berechnet als C₃N₃O₃; Molekulargewicht = 126)
- Gehalt an blockierten Isocyanatgruppen: 4,57 %
   (berechnet als NCO; Molekulargewicht = 42)
- Gehalt an Hydrazidgruppen: 0 %
   (berechnet als HN-NH; Molekulargewicht = 30)

### Beispiel 5 (Vergleichsbeispiel)

Als Vergleich dient ein wäßriges blockiertes Polyisocyanat (Mischung aus trimerisiertem HDI und ®Desmodur W), hergestelt gemäß Beispiel 2 der EP-A 566 953, mit einem Festkörper von 40 % und einer Viskosität von 25.000 mPas (23°C). Das NCO-Äquivalentgewicht (bezogen auf die blockierten Isocyanatgruppen) liegt bei 954,55 g. Das blockierte Polyisocyanat besitzt folgende Kennzeichen:
- Gehalt an Isocyanuratgruppen: 11,25 %
   (berechnet als C₃N₃O₃; Molekulargewicht = 126)
- Gehalt an blockierten Isocyanatgruppen: 11,00 %
   (berechnet als NCO; Molekulargewicht = 42)
- Gehalt an Hydrazidgruppen: 0 %
   (berechnet als HN-NH; Molekulargewicht = 30)

### Beispiel 6 (Vergleichsbeispiel)

Als Vergleich dient ein wäßriges blockiertes Polyisocyanat (biuretisiertes HDI), hergestellt gemäß Beispiel 1, welches mit Hydrazidgruppen stabilisiert ist, jedoch keine Isocyanuratgruppen enthält.

### Ansatz:

| | |
|---|---|
| 183,00 g (1,00 val) | eines Lackpolyisocyanats, hergestellt gemäß dem in EP-A 150 769 beschriebenen Verfahren, mit einem NCO-Gehalt von 22,95 % und einer Viskosität von 2750 mPas (23°C) |
| | |
| 75,00 g (0,10 val) | ®Carbowax 750 |
| | |
| 69,70 g (0,80 val) | Butanonoxim |
| | |
| 2,55 g (0,03 val) | IPDA |
| | |
| 2,61 g (0,03 val) | ASDH |
| | |
| 618,00 | g entionisiertes Wasser |

### Durchführung:

In einer Standard-Rührapparatur werden 75,00 g ®Carbowax 750 vorgelegt und auf 90°C erhitzt. Unter Rühren werden zügig 183,00 g des o.g. Polyisocyanats hinzugegeben. Innerhalb von ca. 30 Minuten wird ein NCO-Wert von 14,48 % erreicht (theoretischer NCO-Wert: 14,65 %). Anschließend wird das Reaktionsgemisch auf 70°C abgekühlt und 69,70 g Butanonoxim innerhalb von ca. 30 Minuten so zudosiert, daß eine Temperatur von 80°C nicht überschritten wird (exotherme Reaktion). Beim Erreichen eines NCO-Wertes von 0,93 % (theoretischer NCO-Wert: 1,28 %) wird das auf 70°C abgekühlte Reaktionsgemisch durch Überführung in eine Lösung von 2,55 g IPDA und 2,61 g ASDH in 618,00 g entionisiertem Wasser (ca. 23°C) innerhalb von ca. 30 Minuten unter gutem Rühren dispergiert. Man erhält eine milchige Dispersion mit einem Festkörper von 35 % und einer Auslaufzeit von 14 Sekunden (DIN 4/23°C). Das NCO-Äquivalentgewicht der Dispersion (bezogen auf die blockierten Isocyanatgruppen) liegt bei 1189,80 g. Das blockierte Polyisocyanat besitzt folgende Kennzeichen:
- Gehalt an Isocyanuratgruppen: 0 %
   (berechnet als C₃N₃O₃; Molekulargewicht = 126)
- Gehalt an blockierten Isocyanatgruppen: 10,09 %
   (berechnet als NCO; Molekulargewicht = 42)
- Gehalt an Hydrazidgruppen: 0,27 %
   (berechnet als HN-NH; Molekulargewicht = 30)

### Beispiel 7

Es werden die Klarlackkombinationen aus der eingangs erläuterten Polyolkomponente mit den blockierten Vernetzern der Beispiele 1 bis 6, die Applikations- und Einbrennbedingungen sowie die Thermovergilbung beschrieben.
1. Klarlack-Aufbau
Die Klarlacke werden durch Mischen der blockierten Polyisocyanate der Beispiele 1 bis 6 mit der eingangs beschriebenen Polyolkomponente im Verhältnis ihrer Äquivalentgewichte (BNCO:OH = 1:1) unter Zugabe eines Katalysators, wie nachfolgend angegeben, hergestellt.

| Klarlack-rezeptur | Polyisocyanat | | Polyolkomponente | Katalyse 0,1 % Dibutylzinndilaurat |
|---|---|---|---|---|
| A | Bsp. 1 | 1750,00 g | 894,70 g | 2,65 g |
| B | Bsp. 2 | 1409,40 g | 894,70 g | 2,30 g |
| C | Bsp 3 | 734,27 g | 894,70 g | 1,63 g |
| D | Bsp 4 | 2625,00 g | 894,70 g | 3,52 g |
| E | Bsp 5 | 954,55 g | 894,70 g | 1,85 g |
| F | Bsp 6 | 1189,80 g | 894,70 g | 2,08 g |

2. Applikation und Thermovergilbung
Die obigen Klarlacke werden auf Prüfbleche, die mit einem handelsüblichen, weißen Basislack, z B. von der Fa. Spies & Hecker/Köln, beschichtet sind, in einer Naßschichtdicke von ca. 120 bis 150 µm appliziert. Die Prüfbleche werden für 30 Minuten bei 140°C im Trockenschrank eingebrannt. Danach erfolgt die erste Farbmessung nach der sogenannten CIE-LAB-Methode. Je größer hierbei der ermittelte positive b-Wert ist. um so stärker hat sich der Klarlack gelb verfärbt. Anschließend erfolgt der Überbrennvorgang für 30 Minuten bei 160°C. Danach wird der Zuwachs der Gelbfärbung, der sogennante Δb-Wert, nach dem CIE-LAB-Farbsystem (DIN 6174) gemessen. Dieser Wert sollte für nicht vergilbende Klarlacke möglichst nahe bei 0 liegen.
Die Ergebnisse der Klarlacke A bis F sind tabellarisch, wie folgt, zusammengefaßt.

| Klarlack-rezeptur | Thermovergilbung nach dem Einbrennvorgang (b) | Thermovergilbung nach dem Überbrennvorgang (Δb) | Schichtdicke (µm) |
|---|---|---|---|
| A | 1,2 | 0,3 | 40 |
| B | 1,0 | 0,0 | 40 |
| C | 0,8 | 0,0 | 45 |
| D | 4,3 | 8,0 | 40 |
| E | 3,8 | 5,3 | 45 |
| F | 1,9 | 1,2 | 40 |

Die obige Messung führt zu folgendem Ergebnis:
- Der Klarlackfilm D mit einem blockierten Polyisocyanat gemäß dem Stand der Technik, welches weder Isocyanurat- noch Hydrazidgruppen aufweist, zeigt die stärkste Vergilbung. Die Gelbwerte b + Δb addieren sich zu 12,3.
- Der Klarlackfilm E mit einem blockierten Polyisocyanat gemäß dem Stand der Technik, welches zwar Isocyanurat- jedoch keine Hydrazidgruppen aufweist, zeigt eine geringfügige Verbesserung der Vergilbung. Die Gelbwerte b + Δb addieren sich zu 9,1.
- Der Klarlackfilm F mit einem blockierten Polyisocyanat, welche keine Isocyanurat- jedoch Hydrazidgruppen enthält, zeigt zwar eine geringere Vergilbung als die Klarlacke D und E, erreicht aber bei weitem noch nicht das Niveau der Klarlacke A bis C. Die Gelbwerte addieren sich zu 3,1.
- Die Klarlacke A, B und C mit den erfindungsgemäßen blockierten Polyisocyanaten, welche sowohl Isocyanurat- als auch Hydrazidgruppen enthalten, zeichnen sich hingegen durch eine signifikante Verbesserung der Vergilbung aus. Die Gelbwerte b + Δb addieren sich zu 1,5 für Klarlack A, 1,0 für Klarlack B und 0,8 für Klarlack C, welcher das blockierte Polyisocyanat mit dem höchsten Anteil an Isocyanurat- und Hydrazidgruppen aufweist

## Patentansprüche

1. Wäßrige oder wasserverdünnbare blockierte Polyisocyanate aus
a) 40 bis 80 Gew.-% einer Polyisocyanatkomponente auf Basis von Diisocyanaten des Molekulargewichtsbereiches von 140 bis 350 mit einem Isocyanuratgruppengehalt (berechnet als C₃N₃O₃; Molekulargewicht = 126) von 2 bis 30 Gew.-% und
b) 5 bis 30 Gew.-% eines oder mehrerer im Sinne der Isocyanat-Additionsreaktion monofunktioneller Blockierungsmittel für Isocyanatgruppen und
c) 0,5 bis 15 Gew.-% einer oder mehrerer im Sinne der Isocyanat-Additionsreaktion mono- oder difunktioneller Stabilisierungskomponenten mit 1 bis 2 Hydrazidgruppen des Molekulargewichtsbereichs von 70 bis 300 und
d) 5 bis 30 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung und
e) 0 bis 15 Gew.-% einer (potentiell) anionischen Aufbaukomponente aus mindestens einer Komponente mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe und
f) 0 bis 15 Gew.-% eines oder mehrerer (cyclo)aliphatischer Polyamine mit 2 bis 3 Aminogruppen des Molekulargewichtsbereichs von 60 bis 300 und
g) 0 bis 15 Gew.-% eines oder mehrerer mehrwertiger Alkohole mit 2 bis 4 Hydroxylgruppen des Molekulargewichtsbereichs von 62 bis 250, wobei sich die genannten Prozentangaben von a) bis g) zu 100 ergänzen, **dadurch gekennzeichnet, daß**
h) der Gehalt an Isocyanuratgruppen (berechnet als C₃N₃O₃; Molekulargewicht = 126) mindestens 2 Gew.-% und
i) der Gehalt an blockierten Isocyanatgruppen (berechnet als NCO, Molekulargewicht = 42) 5 bis 11 Gew.-% und
k) der Gehalt an chemisch gebundenen Hydrazidgruppen (berechnet als HN-NH; Molekulargewicht = 30) 0,1 bis 3,0 Gew.-% beträgt.

2. Verfahren zur Herstellung von wäßrigen oder wasserverdünnbaren blockierten Polyisocyanaten gemäß Anspruch 1, **dadurch gekennzeichnet, daß** man
A) 100 Äquivalent-% einer Isocyanuratgruppen aufweisenden (cyclo)-aliphatischen Polyisocyanatkomponente mit
B) 60 bis 85 Äquivalent-% eines oder mehrerer monofunktioneller Blockierungsmittel für Isocyanatgruppen und
C) 1 bis 20 Äquivalent-% einer oder mehrerer Hydrazidgruppen enthaltender Stabilisierungskomponenten und
D) 1 bis 25 Äquivalent-% einer Ethylenoxideinheiten enthaltenden nichtionisch-hydrophilen Aufbaukomponente und
E) 0 bis 25 Äquivalent-% einer Carboxylgruppen enthaltenden (potentiell) anionischen Aufbaukomponente und
F) 0 bis 15 Äquivalent-% eines oder mehrerer (cylco)aliphatischer Polyamine und
G) 0 bis 15 Äquivalent-% eines oder mehrerer mehrwertiger Alkohole umsetzt,
wobei die Mengenverhältnisse der Reaktionspartner so gewählt werden, daß das Äquivalentverhältnis von Isocyanatgruppen der Komponente A) zu gegenüber Isocyanaten reaktionsfähigen Gruppen der Komponenten B), C), D), E), F) und G) bei 1:0,8 bis 1:1,2 liegt.

3. Verwendung der wäßrigen oder wasserverdünnbaren blockierten Polyisocyanate gemäß Anspruch 1 und 2 in Kombination mit in Wasser löslichen oder dispergierbaren Polyhydroxylverbindungen zur Herstellung von, gegebenenfalls die üblichen Hilfs- und Zusatzmittel der Beschichtungstechnologie enthaltenden, wäßrigen Einbrennlacken.

## Claims

1. Aqueous or water-dilutable blocked polyisocyanates formed from
a) 40 to 80 wt. % of a polyisocyanate component having an isocyanurate group content (calculated as C₃N₃O₃; molecular weight = 126) of 2 to 30 wt. % and based on diisocyanates having a molecular weight of 140 to 350 and
b) 5 to 30 wt. % of one or more blocking agents for isocyanate groups, which are monofunctional for purposes of the isocyanate addition reaction and
c) 0.5 to 15 wt. % of one or more stabilizing components which are mono- or difunctional for purposes of the isocyanate addition reaction and have 1 to 2 hydrazide groups and a molecular weight of 70 to 300 and
d) 5 to 30 wt. % of a non-ionic hydrophilic structural component composed of at least one compound which is mono- or difunctional for purposes of the isocyanate addition reaction and contains at least one hydrophilic polyether chain and
e) 0 to 15 wt. % of a (potentially) anionic structural component comprising at least one component having at least one NCO-reactive group and at least one group capable of salt formation, which may be present in at least partially neutralized form, and
f) 0 to 15 wt. % of one or more (cyclo)aliphatic polyamines having 2 to 3 amino groups and a molecular weight of 60 to 300 and
g) 0 to 15 wt. % of one or more polyhydric alcohols having 2 to 4 hydroxyl groups and a molecular weight of 62 to 250,
wherein the sum of the stated percentages of a) to g) is 100, **characterized in that**
h) the amount of isocyanurate groups (calculated as C₃N₃O₃; molecular weight = 126) is at least 2 wt. % and
i) the amount of blocked isocyanate groups (calculated as NCO; molecular weight = 42) is 5 to 11 wt. % and
k) the amount of chemically bound hydrazide groups (calculated as HN-NH; molecular weight = 30) is 0.1 to 3.0 wt. %.

2. Process for preparing aqueous or water-dilutable blocked polyisocyanates according to Claim 1, **characterized in that**
A) 100 equivalent-% of a (cyclo)aliphatic polyisocyanate component containing isocyanurate groups is reacted with
B) 60 to 85 equivalent-% of one or more monofunctional blocking agents for isocyanate groups and
C) 1 to 20 equivalent-% of one or more stabilizing components containing hydrazide groups and
D) 1 to 25 equivalent-% of a non-ionic hydrophilic structural component containing ethylene oxide units and
E) 0 to 25 equivalent-% of a (potentially) anionic structural component containing carboxyl groups and
F) 0 to 15 equivalent-% of one or more (cyclo)aliphatic polyamines and
G) 0 to 15 equivalent-% of one or more polyhydric alcohols,
wherein the proportions of the reactants are selected such that the equivalent ratio of isocyanate groups of component A) to isocyanate-reactive- groups of components B), C), D), E), F) and G) is 1:0.8 to 1:1.2.

3. Use of the aqueous or water-dilutable blocked polyisocyanates according to Claim 1 and 2 in combination with water-soluble or -dispersible polyhydroxyl compounds for preparing aqueous baking varnishes optionally including the customary auxiliaries and additives of coating technology.

## Revendications

1. Polyisocyanates bloqués, aqueux ou diluables dans l'eau constitués de
a) 40 à 80 % en poids d'un composant polyisocyanate à base de diisocyanates dont le poids moléculaire est compris entre 140 et 350, présentant une teneur en groupes isocyanurate (calculée comme C₃N₃O₃; poids moléculaire = 126) de 2 à 30 % en poids et
b) 5 à 30 % en poids d'un ou de plusieurs agents bloquants monofonctionnels dans le sens de la réaction d'addition d'isocyanate pour les groupes isocyanate et
c) 0,5 à 15 % en poids d'un ou de plusieurs composants de stabilisation mono- ou difonctionnels dans le sens de la réaction d'addition d'isocyanate comportant 1 à 2 groupes hydrazide dont le poids moléculaire est compris entre 70 et 300 et
(d) 5 à 30 % en poids d'un composant de structure non ionique-hydrophile, constitué d'au moins un composé mono- ou difonctionnel dans le sens de la réaction d'addition d'isocyanate, présentant au moins une chaîne polyéther hydrophile et
(e) 0 à 15 % en poids d'un composant de structure (potentiellement) anionique, constitué d'au moins un composant comportant au moins un groupe réactif à l'égard des groupes NCO et au moins un groupe apte à la salification, présent le cas échéant sous forme neutralisée au moins partiellement et
(f) 0 à 15 % en poids d'une ou de plusieurs polyamines (cyclo)aliphatiques comportant 2 à 3 groupes amino dont le poids moléculaire est compris entre 60 et 300 et
(g) 0 à 15 % en poids d'un ou de plusieurs alcools polyvalents comportant 2 à 4 groupes hydroxyle dont le poids moléculaire est compris entre 62 et 250,
les pourcentages de a) à g) cités se complétant pour obtenir 100, **caractérisés en ce que**
(h) la teneur en groupes isocyanurate (calculée comme C₃N₃O₃; poids moléculaire = 126) atteint au moins 2 % en poids et
(i) la teneur en groupes isocyanate bloqués (calculée comme NCO; poids moléculaire = 42) atteint 5 à 11 % en poids et
(k) la teneur en groupes hydrazide chimiquement liés (calculée comme HN-NH; poids moléculaire = 30) atteint 0,1 à 3,0 % en poids.

2. Procédé de production de polyisocyanates bloqués aqueux ou diluables dans l'eau selon la revendication 1, **caractérisés en ce que** l'on fait réagir
A) 100 % en équivalent d'un composant polyisocyanate (cyclo)aliphatique comportant des groupes isocyanurate avec
B) 60 à 85 % en équivalent d'un ou de plusieurs agents bloquants monofonctionnels pour les groupes isocyanate et
C) 1 à 20 % en équivalent d'un ou de plusieurs composants de stabilisation comportant des groupes hydrazide et
D) 1 à 25 % en équivalent d'un composant de structure non ionique-hydrophile comportant des unités d'oxyde d'éthylène et
E) 0 à 25 % en équivalent d'un composant de structure (potentiellement) anionique comportant des groupes carboxyle et
F) 0 à 15 % en équivalent d'une ou de plusieurs polyamines (cyclo)aliphatiques et
G) 0 à 15 % en équivalent d'un ou de plusieurs alcools polyvalents,
les proportions des partenaires réactionnels étant sélectionnées de manière telle que le rapport d'équivalence entre les groupes isocyanate du composant A) et les groupes réactifs à l'égard des isocyanates des composants B), C), D), E), F) et G) soit compris entre 1:0,8 et 1:1,2.

3. Utilisation des polyisocyanates bloqués aqueux ou diluables dans l'eau selon la revendication 1 ou 2, en association avec des composés polyhydroxyliques solubles ou dispersables dans l'eau, pour produire des peintures ou vernis aqueux à cuire, contenant le cas échéant les adjuvants et les additifs habituels de la technologie des revêtements.
